# EUROPÄISCHE PATENTSCHRIFT

(11) **EP 0 663 786 B1**
(45) Veröffentlichungstag und Bekanntmachung des Hinweises auf die Patenterteilung: **07.01.2004**
(21) Anmeldenummer: 94118451.7
(22) Anmeldetag: 24.11.1994
(51) Int. Cl.: H04Q 11/00

(54) **Verfahren zur digitalen Datenübertragung**
Method of digital data transmission
Procédé de transmission de données numériques

(30) Priorität: 14.12.1993 DE 4342559
(43) Veröffentlichungstag der Anmeldung: 19.07.1995
(73) Patentinhaber: ALCATEL, 75008 Paris (FR)
(72) Erfinder: Chahabadi, Ziaedin, Dr.-Ing., D-31848 Bad Münder (DE); Ocker, Johannes, D-30453 Hannover (DE)
(74) Vertreter: Menzietti, Domenico, Dipl.-Ing

(56) Entgegenhaltungen:
- EP-A- 0 285 154
- US-A- 4 535 443
- LOLISCHKIES J: "OPAL-ANSCHLUSSNETZE AN DIGITALEN TEILNEHMERVERMITTLUNGSSTELLEN" NTZ NACHRICHTENTECHNISCHE ZEITSCHRIFT, Bd. 46, Nr. 1, 1. Januar 1993 (1993-01-01), Seiten 22-24, 26 - 28, XP000335728 ISSN: 0027-707X

## Beschreibung

Die Erfindung bezieht sich auf ein Verfahren zur digitalen Datenübertragung zwischen einer Vermittlungsstelle eines Fernmeldenetzes und an dieselbe über Leitungen angeschlossenen Teilnehmern, bei welchem in räumlicher Nähe der Teilnehmer ein Endverzweiger mit einem Netzabschluß in den Übertragungsweg eingeschaltet wird, der einen Netzabschluß mit einem Sender und einem Empfänger aufweist (DE-Z "ntz" Bd. 46 (1993) Heft 1, Seiten 22 bis 28).

In Fernmeldenetzen werden herkömmliche Kupferkabel und in immer stärkerem Maße optische Kabel mit Lichtwellenleitern - im folgenden kurz als "LWL" bezeichnet - eingesetzt. Das erklärte Ziel besteht darin, die LWL als Übertragungsmedium optischer Signale im gesamten Fernmeldenetz, also im Anschlußleitungsnetz, einzusetzen und damit nach Möglichkeit bis zu jedem einzelnen Teilnehmer zu führen (Fibre to the home). Mittels der LWL sollen die mit diesem Übertragungsmedium möglichen hohen Übertragungsraten den Teilnehmern zur Verfügung gestellt werden. Die bisher separaten Anschlußleitungen für die unterschiedlichen Dienste können dabei durch nur einen LWL-Anschluß ersetzt werden. Diese Dienste umfassen heute u. a. Telefon, Telefax, Telex, Teletex, IDN und ISDN (Basis- und Primärmultiplexanschlüsse). Für ein solches Verzweigernetz werden geeignete Geräte, insbesondere bei den Teilnehmern, und preiswerte Glasfaser-Übertragungssysteme benötigt.

Ein derartiges Anschlußleitungsnetz ist in der oben erwähnten DE-Z "ntz" beschrieben. Es ist unter der Bezeichnung "Opal" als Pilotprojekt der DBP Telekom bekannt. Die Teilnehmer sind darin über Glasfasern bzw. LWL mit einer Vermittlungsstelle verbunden. Dabei ist von der Vermittlungsstelle ausgehend ein LWL bis zu einem optischen Verteiler geführt, von dem aus mehrere LWL zu einer Anzahl von Teilnehmern weitergeführt sind. In diesem passiven Anschlußleitungsnetz wird die Lichtleistung je nach Anzahl der Teilnehmer aufgeteilt, was zu einer Beschränkung der Teilnehmeranzahl führt. Die Reichweite der Übertragung und die Übertragungsraten sind außerdem begrenzt.

EP 0 285 154 A2 offenbart ein System zum Anschluss mehrerer Endgeräte an eine Netzabschlusseinrichtung in einem Breitbandnachrichtennetz. Endgeräte unterschiedlichster Bitrate sind über drei Busleitungen mit der Netzabschlusseinrichtung verbunden, die eine vierdrähtige Teilnehmeranschlussleitung eines Fernmeldenetzes abschließt und aus einer Anpasseinrichtung und einem Zuteiler besteht.

US 4,535,443 offenbart ein Endgerät mit einem ersten Equalizer, einem Konverter und einem zweiten Equalizer. Der zweite Equalizer dient zur Vorverzerrung eines zu übertragenden Datensignals. Dazu wird das zu übertragende Datensignal mit Korrektursignalen überlagert, die aus einer Verzögerung des Datensignals mit anschließender Multiplikation mit Koeffizienten gewonnen werden. Die Koeffizienten werden durch Konversion von im ersten Equalizer generierten Parametern gewonnen.

Der Erfindung liegt die Aufgabe zugrunde, die eingangs geschilderte Schaltungsanordnung so zu gestalten, daß die Vorteile der optischen Nachrichtenübertragung mit ihren hohen Übertragungsraten auch im Anschlußleitungsnetz für eine nicht beschränkte Anzahl von Teilnehmern ausgenutzt werden können.

Diese Aufgabe wird gemäß der Erfindung dadurch gelöst,
- daß zwischen dem Endverzweiger und den Teilnehmern Leitungen mit metallischen Leitern verwendet werden,
- daß an jede dieser Leitungen mindestens eine bei einem Teilnehmer befindliche Endeinrichtung zum Senden und Empfangen von Daten angeschlossen wird, die mit einem Sender und einem Empfänger ausgerüstet ist und
- daß dem Sender der Endeinrichtung eine mit dem Empfänger derselben verbundene Einheit zugeordnet wird, durch welche die Amplitude der zum Empfänger des Endverzweigers zu sendenden Daten nach Maßgabe eines vom Empfänger kommenden Signals erhöht wird, das eine Dämpfung der vom Sender des Endverzweigers kommenden, empfangenen Daten berücksichtigt.

Von den Endverzweigern führen elektrische Leitungen zu den Endeinrichtungen der Teilnehmer, die bei richtiger Anordnung der Endverzweiger im Verhältnis zu den Teilnehmern relativ kurz gehalten werden können. Ein entsprechend aufgebautes Anschlußleitungsnetz ist mit heute vorhandenen Mitteln ohne großen Aufwand realisierbar. Es kann daher sofort eingesetzt werden, zumal in den Räumlichkeiten der Teilnehmer selbst keine wesentlichen Änderungen durchgeführt werden müssen. Die von den Endverzweigern zu den Endeinrichtungen der Teilnehmer führenden elektrischen Leitungen können so kurz ausgeführt werden, daß jedem Teilnehmer problemlos Übertragungskanäle mit einer Übertragungsrate von beispielsweise 2,56 Mbit/s angeboten werden können.

Mit diesem Verfahren ist außerdem auf einfache Weise sichergestellt, daß vom Empfänger des Endverzweigers unabhängig von der Länge des Übertragungswegs Daten mit optimal geformten Impulsen der einzelnen Endeinrichtungen empfangen werden. Es wird dabei davon ausgegangen, daß die vom Empfänger einer Endeinrichtung empfangenen Daten zwischen dem Sender des Endverzweigers und diesem Empfänger in gleicher Weise gedämpft werden, wie die vom Sender dieser Endeinrichtung zum Endverzweiger gesendeten Daten. Es handelt sich in beiden Fällen um die vom Übertragungsweg herrührende Dämpfung. Da der Übertragungsweg in beiden Fällen durch zwei Kupferadern gebildet wird, ist diese Annahme in engen Grenzen richtig.

Die Dämpfung der Daten wird vom Empfänger jeder Endeinrichtung automatisch festgestellt. Dort wird nicht nur jeweils der optimale Abtastzeitpunkt eingestellt, sondern es werden auch die Entscheidungsschwelle und gegebenenfalls der Entzerrer angepaßt. Der Grad der Dämpfung der empfangenen Daten und gegebenenfalls auch deren Verzerrung liegen also beim Empfänger jeder Endeinrichtung vor. Der Empfänger wird jeweils adaptiv nachgeführt. Sowohl die Dämpfung der Daten als auch deren Verzerrung sind erfaßbar. Entsprechende Werte werden der dem Sender zugeordneten Einheit als Signale aufgegeben. Durch diese Einheit wird die Amplitude der zu sendenden Daten entsprechend der festgestellten Dämpfung erhöht. Es ist zusätzlich auch möglich, die Daten bzw. deren Impulse so vorzuformen, daß die auf dem Übertragungsweg vom Sender der Endeinrichtung zum Empfänger des Endverzweigers eintretenden - bekannten - Verzerrungen so kompensiert werden, daß vom Empfänger des Endverzweigers optimal geformte Daten bzw. Impulse empfangen werden. Wesentlich bei diesem Verfahren ist, daß am Übertragungsweg zwischen den Sendern der Endeinrichtungen und dem Empfänger des Endverzweigers nichts gemacht wird. Es werden vielmehr die am Empfänger der jeweiligen Endeinrichtung gewonnenen und damit ohnehin vorhandenen Werte des anderen Übertragungswegs ausgenutzt. Der Empfänger im Endverzweiger kann entsprechend einfach aufgebaut sein. Es müssen keine Maßnahmen getroffen werden, um undefiniert gedämpfte und gegebenenfalls verzerrte Daten der unterschiedlichen Endeinrichtungen empfangen zu können.

Das Verfahren nach der Erfindung wird im folgenden anhand der Zeichnungen als Ausführungsbeispiel erläutert.

Es zeigen:
Fig. 1 in schematischer Darstellung einen Ausschnitt aus einem Fernmeldenetz.
Fig. 2 einen Ausschnitt aus dem Teilnehmerbereich des Telefonnetzes ebenfalls in schematischer Darstellung.

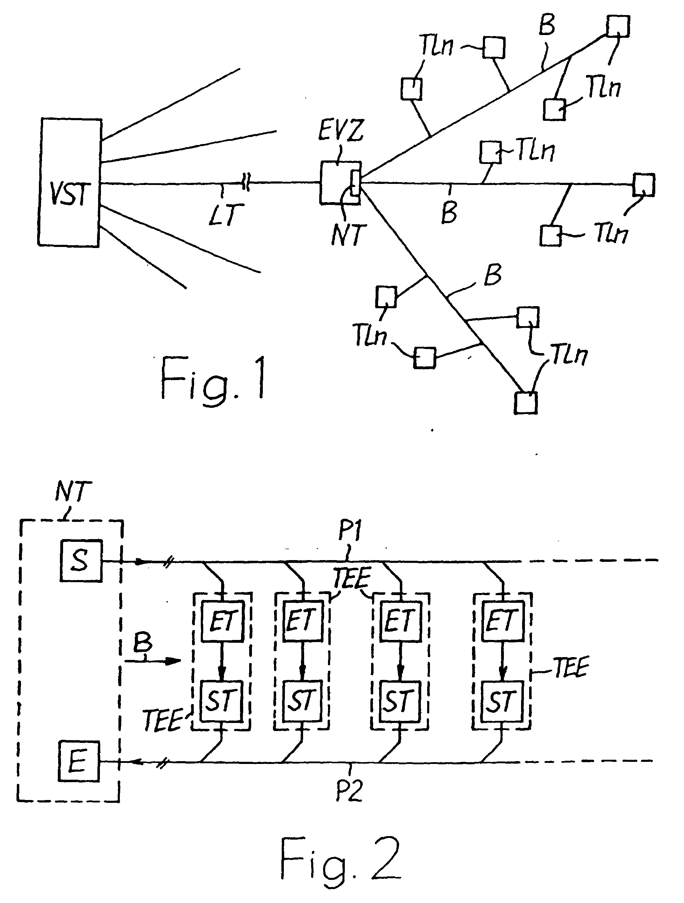

Von der in Fig. 1 dargestellten Vermittlungsstelle VST geht eine Leitung LT bis zu einem Endverzweiger EVZ. Die Leitung LT kann elektrische Leiter oder optische Leiter (Lichtwellenleiter) oder beide Leiterarten enthalten. An eine VST kann eine große Anzahl von EVZ über Leitungen LT angeschlossen sein. Der EVZ befindet sich in räumlicher Nähe von Teilnehmern Tln. Zwischen dem EVZ und den Tln sind Leitungen B - im folgenden als "Bus B" bezeichnet - angeordnet, die mit metallischen Leitern ausgerüstet sind. Jeder Bus B ist vorzugsweise als Vierdrahtleitung ausgeführt. An jeden Bus B sind mindestens zwei Tln angeschlossen. Im EVZ ist ein Netzabschluß NT angebracht, an den alle Busse B angeschlossen sind. Jeder Tln ist mit mindestens einer Endeinrichtung TEE ausgerüstet.

Die EVZ werden so nahe wie möglich bei möglichst mehreren Tln installiert, um die Busse B kurz halten zu können. Wenn ein Tln oder mehrere Tln sich in der Nähe einer VST befindet bzw. befinden, kann die VST selbst als EVZ dienen. Der NT wäre dann in der VST angeordnet.

Der NT hat neben anderen Bauteilen gemäß Fig. 2 einen Sender S und einen Empfänger E. Wenn die Busse B als Vierdrahtleitungen ausgebildet sind, werden vorzugsweise sogenannte "Vierer" eingesetzt, in denen vier Adern mit Kupferleiter miteinander verseilt sind. Je zwei Adern bilden ein Paar. Das eine Paar P1 der Busse B wird mit dem Sender S des gestrichelt umrandeten NT verbunden, während das andere Paar P2 an dessen Empfänger E angeschlossen ist. Sender S und Empfänger E des NT bzw. des EVZ sind fest eingestellt. Statt einer Vierdrahtleitung können für die Busse B auch andere Leitungen mit elektrischen Leitern eingesetzt werden. Bei bidirektionalem Betrieb reicht beispielsweise eine Zweidrahtleitung. Im folgenden wird weiter von einer Vierdrahtleitung ausgegangen.

Jede TEE der Tln weist neben anderen Bauteilen einen Empfänger ET und einen Sender ST auf. In Fig. 2 sind vier mit gestrichelten Linien umrandete TEE dargestellt. Ihre Empfänger ET sind mit dem Paar P1 des vom NT ausgehenden Busses B verbunden, während ihre Sender ST an das Paar P2 angeschlossen sind. Die Anschlußstellen der einzelnen TEE sind unterschiedlich weit vom NT entfernt. Die auf den Paaren P1 und P2 übertragenen Daten werden entfernungsabhängig unterschiedlich gedämpft und verzerrt.

Die Empfänger ET der TEE sind nicht fest eingestellt, sondern adaptiv. Sie passen sich automatisch den zu empfangenden Daten an. Das gilt insbesondere für den Abtastzeitpunkt, die Entscheidungsschwelle und gegebenenfalls den Entzerrer. Die aus der Adaption entnehmbare Information über die Dämpfung bzw. Verzerrung der empfangenen Daten wird zur Beeinflussung des Senders ST der jeweiligen TEE verwendet. Dazu ist jedem Sender ST eine Einheit zugeordnet, welche ein entsprechendes Signal von Empfänger ET empfängt und die zu sendenden Daten so verändert, das am Empfänger E des NT einwandfrei zu detektierende Daten ankommen.

Dazu wird auf jeden Fall nach Maßgabe des Signals vom jeweiligen Empfänger ET die Amplitude der zu sendenden Daten erhöht. Es kann aber auch die gesamte, vom jeweiligen Empfänger ET erkannte und ausgeglichene Verzerrung der empfangenen Daten so ausgenutzt werden, daß die zu sendenden Daten bzw. die Impulse nicht nur eine erhöhte Amplitude haben, sondern vorverzerrt werden. Die durch den Einfluß des Paares P2 sich jeweils ergebende Verzerrung der Daten führt dann zur Rückbildung der Vorverzerrung, so daß der Empfänger E des NT bzw. des EVZ Daten mit wenig oder gar nicht verzerrten Impulsen empfängt.

## Patentansprüche

1. Verfahren zur digitalen Datenübertragung zwischen einer Vermittlungsstelle eines Fernmeldenetzes und an dieselbe über Leitungen angeschlossenen Teilnehmern, bei welchem in räumlicher Nähe der Teilnehmer ein Endverzweiger in den Übertragungsweg eingeschaltet wird, der einen Netzabschluß mit einem Sender (S) und einem Empfänger (E) aufweist, wobei zwischen dem Endverzweiger (EVZ) und den Teilnehmern (Tln) Leitungen (B) mit metallischen Leitern verwendet werden, und an jede dieser Leitungen (B) mindestens eine bei einem Teilnehmer (Tln) befindliche Endeinrichtung (TEE) zum Senden und Empfangen von Daten angeschlossen wird, die mit einem Sender (ST) und einem Empfänger (ET) ausgerüstet ist, **dadurch gekennzeichnet daß** dem Sender (ST) der Endeinrichtung (TEE) eine mit dem Empfänger (ET) derselben verbundene Einheit zugeordnet wird, durch welche die Amplitude der zum Empfänger (E) des Endverzweigers (EVZ) zu sendenden Daten nach Maßgabe eines vom Empfänger (ET) kommenden Signals erhöht wird, das eine Dämpfung der vom Sender (S) des Endverzweigers (EVZ) kommenden, empfangenen Daten berücksichtigt.

2. Verfahren nach Anspruch 1, **dadurch gekennzeichnet, daß** die vom Sender (ST) der Endeinrichtung (TEE) zu sendenden Daten durch das Signal des Empfängers (ET) zusätzlich nach Maßgabe einer Verzerrung der vom Empfänger (ET) empfangenen Daten vorverzerrt werden.

3. Endeinrichtung (TEE) beinhaltend einen Sender (ST) und einen Empfänger (ET) zum Senden bzw. Empfangen von Daten zu einem bzw. von einem Netzabschluß (NT) eines digitalen Fernmeldenetzes, **dadurch gekennzeichnet, daß** dem Sender (ST) eine mit dem Empfänger (ET) verbundene Einheit zugeordnet ist, durch welche die Amplitude der durch den Sender (ST) zum Netzabschluß (NT) zu sendenden Daten nach Maßgabe eines vom Empfänger (ET) kommenden Signals erhöht wird, das eine Dämpfung der vom Netzabschluß (NT) empfangenen Daten berücksichtigt.

## Claims

1. Method of digital data transmission between a switching centre of a telecommunication network and subscribers which are connected to it via lines, in which a distribution point with a network termination is connected into the transmission path spatially close to the subscribers, the distribution point having a network termination with a transmitter (S) and a receiver (E), wherein between the distribution point (EVZ) and the subscribers (Tln), lines (B) with metallic conductors are used, and at least one terminal (TEE) on a subscriber's (Tln) premises for transmitting and receiving data is connected to each of these lines (B), and is equipped with a transmitter (ST) and a receiver (ET), **characterized in that** a unit which is connected to the receiver (ET) of the terminal (TEE) is assigned to the transmitter (ST) of the terminal (TEE), and increases the amplitude of the data to be transmitted to the receiver (E) of the distribution point (EVZ) as directed by a signal which comes from the receiver (ET) and takes account of attenuation of received data which comes from the transmitter (S) of the distribution point (EVZ).

2. Method according to Claim 1, **characterized in that** the data to be transmitted by the transmitter (ST) of the terminal (TEE) is additionally pre-emphasized by the signal of the receiver (ET), as directed by distortion of the data which is received by the receiver (ET).

3. Terminal (TEE) including a transmitter (ST) and a receiver (ET) for transmitting and receiving data to and from a network termination (NT) of a digital telecommunication network, **characterized in that** a unit which is connected to the receiver (ET) is assigned to the transmitter (ST), and increases the amplitude of the data to be transmitted by the transmitter (ST) to the network termination (NT) as directed by a signal which comes from the receiver (ET) and takes account of attenuation of data which is received from the network termination (NT).

## Revendications

1. Procédé de transmission de données numérique entre un central téléphonique d'un réseau de télécommunications et les abonnés raccordés à ce réseau par des câbles, dans lequel un sous-répartiteur est raccordé dans le trajet de transmission à proximité spatiale de l'abonné, qui comprend une terminaison réseau avec un poste émetteur (S) et un poste récepteur (E), dans lequel des câbles (B) avec des conducteurs métalliques sont utilisés entre le sous-répartiteur (EVZ) et l'abonné (Tln), et pour chacun de ces câbles (B) est raccordé au moins un équipement terminal (TEE) près d'un abonné (Tln) pour l'émission et la réception de données, qui est équipé d'un poste émetteur (ST) et d'un poste récepteur (ET), **caractérisé en ce que** le poste émetteur (ST) de l'équipement terminal (TEE) dispose d'une unité reliée avec le poste récepteur (ET) du même équipement, par lequel l'amplitude des données à émettre vers le poste récepteur (E) du sous-répartiteur (EVZ) est augmentée conformément à un signal émis par le poste récepteur (ET), qui prend en compte une atténuation des données émises, reçues par le poste émetteur (S) du sous-répartiteur (EVZ).

2. Procédé selon la revendication 1 **caractérisé en ce que** les données à émettre par le poste émetteur (ST) de l'équipement terminal (TEE) sont également préaccentuées par le signal du poste récepteur (ET) conformément à une distorsion des données reçues par le poste récepteur (ET).

3. Equipement terminal (TEE) comprenant un poste émetteur (ST) et un poste récepteur (ET) pour émission ou réception de données vers ou depuis une terminaison réseau (NT) d'un réseau de télécommunications numérique, **caractérisé en ce que** le poste émetteur (ST) dispose d'une unité reliée avec le poste récepteur (ET), par laquelle l'amplitude des données à émettre par le poste émetteur (ST) vers la terminaison réseau (NT) est augmentée conformément à un signal émis par le poste récepteur (ET), qui prend en compte une atténuation des données reçues par la terminaison réseau (NT).
